# EUROPÄISCHE PATENTSCHRIFT

(11) **EP 0 398 338 B1**
(45) Veröffentlichungstag und Bekanntmachung des Hinweises auf die Patenterteilung: **18.08.1993**
(21) Anmeldenummer: 90109365.8
(22) Anmeldetag: 17.05.1990
(51) Int. Cl.: A01K 11/00, A22B 5/00, A22C 17/10

(54) **Schlachttier-Codiervorrichtung**
Apparatus for coding slaughtered animals
Installation de codage pour animaux abattus

(30) Priorität: 19.05.1989 DE 3916306
(43) Veröffentlichungstag der Anmeldung: 22.11.1990
(73) Patentinhaber: Banss Maschinenfabrik GmbH & Co. KG, D-35216 Biedenkopf (DE)
(72) Erfinder: Engelbach, Volker, D-3560 Biedenkopf-Eckelshausen (DE); Weigel, Wilfried, D-3563 Dautphental-Friedensdorf (DE); Schreiber, Helmut, D-8750 Aschaffenburg (DE)
(74) Vertreter: Klunker . Schmitt-Nilson . Hirsch

(56) Entgegenhaltungen:
- EP-A- 0 031 239
- DE-A- 3 018 397
- DE-A- 3 024 128
- FR-A- 2 523 813
- FR-A- 2 620 596
- US-A- 3 916 143

## Beschreibung

Die Erfindung bezieht sich auf eine automatisch arbeitende Schlachttier-Codiervorrichtung, mit einem auf einer Basis angebrachten Codierkopf, der zu dem jeweiligen Schlachttier hin bewegbar und von diesem weg zurückbewegbar ist, und mit einer elektronischen Steuerung des Codierkopfs hinsichtlich des jeweils aufzubringenden Codes, wobei ein ohne Berührung des jeweiligen Schlachttiers arbeitender Codierkopf vorgesehen ist, dessen Bewegung zu dem jeweiligen Schlachttier hin derart gesteuert ist, daß der Codierkopf im Arbeitsabstand zu dem Schlachttier anhält.

Aus der FR-A-26 20 596 ist eine automatisch arbeitende Schlachttier-Codiervorrichtung dieser Art bekannt, die mit einem auf einer Basis angebrachten Codierkopf versehen ist, der zu dem jeweiligen Schlachttier hin bewegbar und von diesem weg zurückbewegbar ist. Darüber hinaus verfügt die bekannte Schlachttier-Codiervorrichtung über eine elektronische Steuerung des Codierkopfs hinsichtlich des jeweils aufzubringenden Codes, wobei eine ohne Berührung des jeweiligen Schlachttiers arbeitender Codierkopf vorgesehen ist. Die Bewegung des Codierkopfs zu dem jeweiligen Schlachttier hin ist derart gesteuert, daß der Codierkopf im Arbeitsabstand zu dem Schlachttier anhält.

Bei der aus der FR-A-26 20 596 bekannten Schlachttier-Codiervorrichtung erfolgt die Einstellung des Arbeitsabstandes über eine mechanische Anschlageinrichtung in Form eines Anschlagprofils, das gegen das mit einer Codierung zu versehende Schlachttier geschwenkt wird. Somit ist auch bei dieser Codiervorrichtung trotz eines an sich berührungslos arbeitenden Codierkopfs eine völlig berührungsfreie Codierung eines Schlachttiers nicht möglich.

Der Erfindung liegt daher die Aufgabe zugrunde, eine Codiervorrichtung der eingangs genannten Art verfügbar zu machen, die völlig berührungsfrei arbeitet und somit auch eine berührungsfreie Zustellung des Codierkopfes zu dem Schlachttier hin ermöglicht.

Zur Lösung dieser Aufgabe ist die Vorrichtung erfindungsgemäß dadurch gekennzeichnet,
daß dem Codierkopf ein berührungsfrei arbeitender Abstandssensor zur Erfassung des Abstands zwischen dem jeweiligen Schlachttier und dem Codierkopf zugeordnet ist; und
daß die Bewegung des Codierkopfs zu dem jeweiligen Schlachttier hin in Abhängigkeit von dem Abstandssensorsignal gesteuert ist.

Die erfindungsgemäße Vorrichtung arbeitet also vollkommen berührungsfrei. Berührungsfrei und schnell arbeitende Codierköpfe, wie sie erfindungsgemäß bevorzugt sind,
funktionieren auch dann, wenn sich das jeweilige Schlachttier während der Codeaufbringung quer zum Codierkopf weiterbewegt. Die im Prinzip vorhandene, leichte, seitliche Streckung des so aufgebrachten Codes beeinträchtigt dessen Lesbarkeit in keiner Weise.

Es wird betont, daß der Begriff "Schlachttiere" auch Teile von Schlachttieren, insbesondere Schlachttierviertel und Schlachttierhälften umfaßt. In allererster Linie ist die erfindungsgemäße Vorrichtung zur Codeaufbringung bei Schweinen und Schweinehälften bestimmt. Der Begriff "Code" umfaßt insbesondere laufende Nummern, Symbole und für das jeweilige Schlachttier spezifische Daten, wie Gewicht, ph-Wert, Klassifizierungssymbole hinsichtlich Fettschichtdicke und dergleichen. Der Codierkopf ist diejenige Komponente der Vorrichtung, mit der der jeweilige Code auf das Schlachttier aufgebracht wird. Die den Codierkopf tragende Basis ruht ihrerseits entweder auf dem Boden des Schlachthofs oder ist hängend an einer Tragkonstruktion angebracht.

Der Codierkopf ist in einer ersten bevorzugten Ausführungsform mit einem Laserschreiber ausgestattet. Dieser kann, gesteuert durch die elektronische Steuerung, durch Schwenkbewegungen des Laserstrahls in extrem kurzer Zeit den Code auf das Schlachttier aufbringen.

In einer zweiten bevorzugten Ausführungsform ist der Codierkopf mit einer Farbspritzeinrichtung ausgestattet. Es versteht sich, daß es sich dabei um eine lebensmittelgerechte Farbe handelt.

Die Farbspritzeinrichtung kann mit einer Farbspritzöffnungsmatrix ausgerüstet sein, so daß die aufzubringenden Codes aus Matrixpunkten zusammengesetzt sind. Bevorzugt ist es jedoch, wenn die Farbspritzeinrichtung eine Reihe von beispielsweise waagerecht nebeneinanderliegenden Farbspritzöffnungen aufweist und wenn der Codierkopf während der Codeaufbringung beispielsweise in Vertikalrichtung verfahrbar ist. Bei einer derartigen Ausbildung werden waagerechte Codelinien gewünschter Länge durch Aktivieren einer geeigneten Anzahl der Farbspritzöffnungen erzeugt. Im wesentlichen vertikale Linien entstehen durch Aktivieren einer Farbspritzöffnung für eine bestimmte Zeitspanne während der vertikalen Verfahrbewegung des Codierkopfs. Bei schräg verlaufenden Linien muß während dieser Verfahrbewegung in der Aktivierung von einer Farbspritzöffnung auf eine andere Farbspritzöffnung umgeschaltet werden. Es ist gleichgültig, ob das Verfahren des Codierkopfs während der Codeaufbringung von unten nach oben oder von oben nach unten erfolgt.

Bevorzugte, berührungsfreie Abstandssensoren sind Lichtschranken, Laserschranken, kapazitive Näherungsschalter und Infrarot-Näherungsschalter.

In Ausgestaltung der Erfindung weist die Vorrichtung einen Impulsgeber für das Vorhandensein eines Schlachttiers auf und ist derart gesteuert, daß in Abhängigkeit von dem Impulsgebersignal die Bewegung des Codierkopfs zu dem Schlachttier hin ausgelöst wird.

Gegenstand der Erfindung ist ferner eine zentrale, speicherprogrammierbare Schlachthof-Steuerung, der ermittelte, spezifische Daten (derjenigen Art, wie sie weiter vorn detaillierter angegeben worden sind) der einzelnen Schlachttiere zugeführt werden und die ihrerseits Steuerbefehle an die elektronische Steuerung einer automatisch arbeitenden Vorrichtung zum Aufbringen von Codes auf Schlachttiere gibt. Die zentrale, speicherprogrammierbare Steuerung führt vorzugsweise außerdem die Zielsteuerung des jeweiligen Schlachttiers oder Schlachttierteils im Kühlhaus durch. Vorzugsweise ist an die zentrale Steuerung ein Scanner angeschlossen, der ihr an Schlachttieren bzw. Schlachttierteilen gelesene Kontrollinformationen zuleitet. Hierbei handelt es sich vorzugsweise um das Lesen der aufgebrachten Codes. Auf diese Art bewerkstelligt die zentrale Steuerung mit ihren Peripheriegeräten sozusagen die Buchhaltung des Schlachthofs; es befinden sich nach jedem Schlachttag in der zentralen Steuerung Daten darüber, wohin die Schlachttiere gegangen sind und welche Daten sie gehabt haben. Der beschriebene Scanner steht daher vorzugsweise am Kühlhausausgang, und im Fall mehrerer Lieferausgänge sind entsprechend mehrere Scanner vorgesehen.

Es wird betont, daß die in den letzten Absätzen beschriebene, zentrale, speicherprogrammierbare Steuerung bzw. Datenverarbeitungsanlage einerseits im Zusammenhang mit der erfindungsgemäßen Codeaufbringungsvorrichtung besonders günstig und bevorzugt ist, daß sie jedoch andererseits auch mit einer anders arbeitenden Codeaufbringungsvorrichtung kombiniert sein kann.

Es wird ferner betont, daß die erfindungsgemäße Codeaufbringungsvorrichtung nicht darauf beschränkt ist, daß sich die Schlachttiere während der Codeaufbringung quer zum stationären Codierkopf weiterbewegen. Es kann alternativ vorgesehen sein, daß sich der Codierkopf während der Codeaufbringung synchron zu dem jeweiligen, bewegten Schlachttier bewegt oder daß die Codeaufbringungsvorrichtung mit einem Taktförderer für die Schlachttiere kombiniert ist, so daß das jeweilige Schlachttier während der Codeaufbringung nicht weiterbewegt wird.

Die Erfindung und Ausgestaltungen der Erfindung werden im folgenden anhand von zeichnerisch dargestellten Ausführungsbeispielen noch näher erläutert. Es zeigt:
- Fig. 1: eine Seitenansicht, gesehen in Schlachttierbewegungsrichtung, einer auf dem Schlachthofboden angeordneten Codeaufbringvorrichtung;
- Fig. 2: in einer Seitenansicht wie in Fig. 1 eine Codeaufbringvorrichtung, die herabhängend angebracht ist;
- Fig. 3: ein Blockdiagramm einer erfindungsgemäßen, zentralen, speicherprogrammierbaren Steuerung bzw. Datenverarbeitungsanlage eines Schlachthofs mit Peripherie.

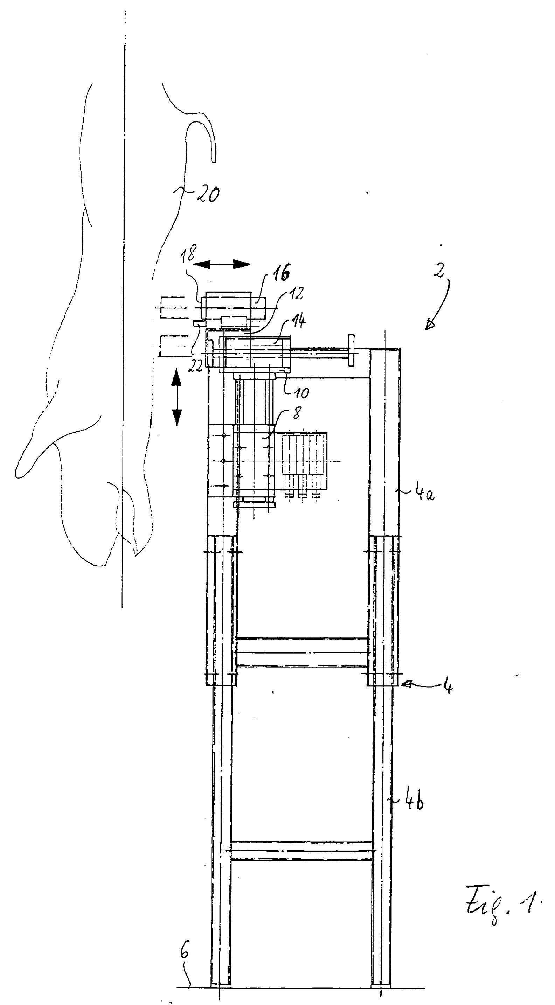

Die Codeaufbringvorrichtung 2 gemäß Fig. 1 weist eine gestellartige Basis 4 auf, die auf dem Schlachthofboden 6 befestigt ist. Ein oberes Teil 4a der Basis 4 ist relativ zu einem unteren Teil 4b der Basis 4 in der Höhe verstellbar, um insbesondere beim Einbau der Vorrichtung 2 eine Anpassung an die jeweiligen Schlachthofverhältnisse vornehmen zu können.

An der Basis 4 ist eine vertikale, pneumatische Zylinder-Kolben-Einheit 8 befestigt, die an ihrer Oberseite ein somit in Vertikalrichtung aufwärts und abwärts verfahrbares, tischartiges Bauteil 10 trägt. Auf dem tischartigen Bauteil 10 ist ein darauf waagerecht verschiebbarer Schlitten 12 und eine waagerechte, pneumatische Zylinder-Kolben-Einheit 14 zum Verschieben des Schlittens 12 angebracht. Auf dem Schlitten 12 ist ein sich im wesentlichen waagerecht erstreckender Codierkopf 16 befestigt, dessen Aktivstirnseite 18 in Fig. 1 nach links einem zu codierenden Schlachtschwein 20 zugewandt ist. Auf dem Schlitten 12 ist, ebenfalls dem Schlachtschwein 20 zugewandt, ein berührungfrei arbeitender Abstandssensor 22, beispielsweise eine Lichtschrankeneinrichtung, angebracht.

Ferner ist ein nicht eingezeichneter Impulsgeber vorgesehen, beispielsweise an einer Rohrbahn, auf der Transporthaken weiterbewegt werden, an denen die Schlachtschweine 20 aufgehängt sind.

Die Vorrichtung arbeitet wie folgt:

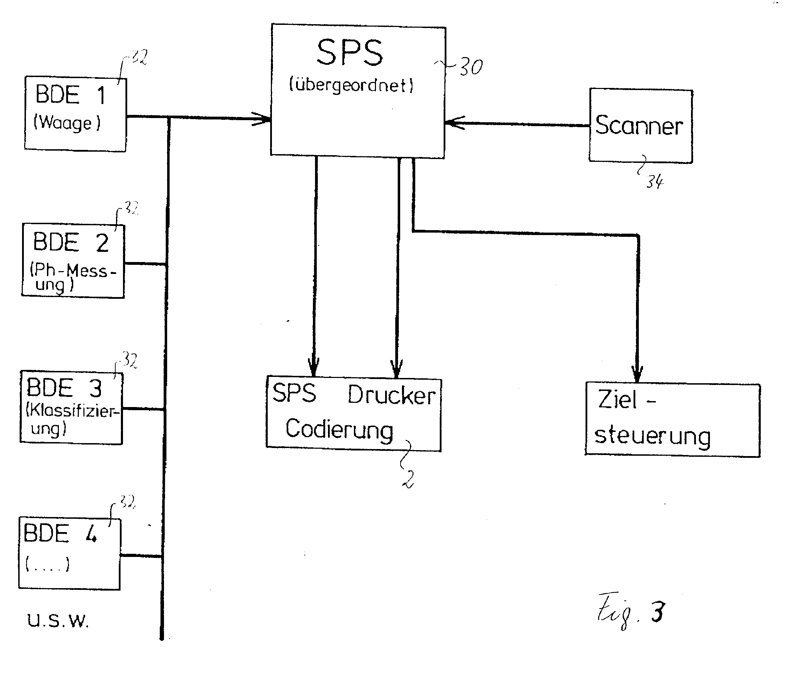

Wenn der Impulsgeber feststellt, daß sich ein Schlachtschwein 20 vor dem Codierkopf 16 befindet, wird durch eine nicht eingezeichnete, elektronische Steuerung eine Bewegung des Codierkopfs 16 zu dem Schlachtschwein 20 hin mittels der Zylinder-Kolben-Einheit 14 ausgelöst. Wenn der Abstandssensor 20 feststellt, daß sich die Stirnseite 18 des Codierkopfs 16 im Arbeitsabstand von dem Schlachtschwein 20 befindet, wird auf ein entsprechendes Abstandssensorsignal hin diese Bewegung des Codierkopfs 16 angehalten. Diese Stellung ist in gestrichelten Linien oben eingezeichnet. Jetzt löst eine nicht eingezeichnete, elektronische Steuerung des Codierkopfs 16 die Aufbringung des aktuell einer zentralen, speicherprogrammierbaren Steuerung (30) (siehe Fig. 3) vorgegebenen Codes aus und steuert die Farbspritzeinrichtung. Während der Codeaufbringung wird der Codierkopf 16 mittels der Zylinder-Kolben-Einheit 8 nach unten verfahren, was mit unteren gestrichelten Linien angedeutet ist. Dieses Verfahren gilt insbesondere, wenn der Codierkopf 16 mit einer Farbspritzeinrichtung ausgestattet ist. Wenn der Codierkopf 16 mit einem Laserschreiber ausgestattet ist, ist dieses vertikale Verfahren entbehrlich. Anschließend wird der Codierkopf 16 von dem Schlachtschwein 20 weg zurückbewegt mittels der Zylinder-Kolben-Einheit 14. Ein Verfahren des Codierkopfs 16 nach oben mittels der Zylinder-Kolben-Einheit 8 bringt diesen wieder in seine Ausgangsstellung. Danach wiederholt sich dieser Arbeitszyklus bei dem nächsten Schlachtschwein 20.

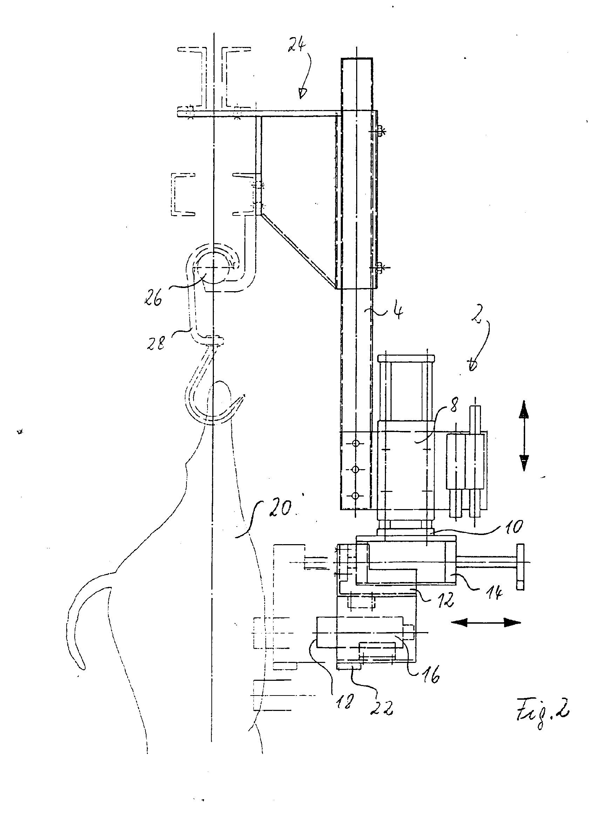

Die Codeaufbringvorrichtung 2 gemäß Fig. 2 unterscheidet sich von der Codeaufbringvorrichtung 2 gemäß Fig. 1 im wesentlichen nur dadurch, daß die Basis 4 eine vertikale Säule ist, die hängend an einer Aufhängungskonstruktion 24 befestigt ist, die auch die Rohrbahn 26 für die Schlachtschwein-Transporthaken 28 trägt. Ansonsten ist die Konstruktion im Prinzip ganz analog. Als Abstandssensor 22 ist hier ein Infrarot-Näherungsschalter angedeutet.

In dem Blockschaltbild der Fig. 3 erkennt man eine zentrale bzw. übergeordnete, speicherprogrammierbare Steuerung 30 bzw. Datenverarbeitungsanlage. Dieser werden für die einzelnen Schlachtschweine spezifische Daten von diversen sog. Betriebsdatenerfassungseinrichtungen 32, wie Waage, ph-Meßgerät, Fettschichtdickenmeßgerät usw. zugeführt. Die zentrale Steuerung 30 steuert ihrerseits eine Codeaufbringvorrichtung 2 bzw. "Codedrucker", insbesondere der zuvor beschriebenen Art. Die der Codeaufbringvorrichtung 2 zugeordnete, elektronische Steuerung kann ebenfalls als speicherprogrammierbare Steuerung SPS ausgebildet sein. Die zentrale Steuerung 30 bewirkt ferner die Zielsteuerung der Schweine bzw. Schweinehälften im Kühlhaus. Beispielsweise im Kühlhaus ist mindestens ein Scanner 34 aufgebaut, der die aufgebrachten Codes der auslaufenden Schweinehälften liest und diese Daten als Kontrollinformation der zentralen Steuerung 30 zuleitet.

Es versteht sich, daß die Codeaufbringvorrichtung 2 und ihr Codierkopf 16 so gesteuert sein können, daß auf zwei Schweinehälften die gleiche Nummer aus einer Reihe von paarweise fortlaufenden Nummern aufgebracht werden.

Der Scanner 34 kann aber auch am Eingang des Kühlhauses stehen, so daß aufgrund der dort gelesenen Codes über die zentrale Steuerung 30 die Zeilsteuerung im Kühlhaus erfolgt.

Eine weitere Möglichkeit besteht darin, mit einer ersten Codeaufbringvorrichtung nur laufende Nummern aufzubringen, danach schlachttierspezifische Daten zu ermitteln und diese mit einer zweiten Codeaufbringvorrichtung, der ein Scanner zum Lesen der Nummerncodes zugeordnet ist, insbesondere als Qualitätscode aufzubringen.

## Patentansprüche

1. Automatisch arbeitende Schlachttier-Codiervorrichtung, mit einem auf einer Basis (4) angebrachten Codierkopf (16), der zu dem jeweiligen Schlachttier (20) hin bewegbar und von diesem weg zurückgebewegbar ist, und mit einer elektronischen Steuerung des Codierkopfs (16) hinsichtlich des jeweils aufzubringenden Codes, wobei ein ohne Berührung des jeweiligen Schlachttiers (20) arbeitender Codierkopf (16) vorgesehen ist, dessen Bewegung zu dem jeweiligen Schlachttier (20) hin derart gesteuert ist, daß der Codierkopf (16) im Arbeitsabstand zu dem Schlachttier anhält,
dadurch gekennzeichnet,
daß dem Codierkopf (16) ein berührungsfrei arbeitender Abstandssensor (22) zur Erfassung des Abstands zwischen dem jeweiligen Schlachttier (20) und dem Codierkopf (16) zugeordnet ist; und
daß die Bewegung des Codierkopfs (16) zu dem jeweiligen Schlachttier (20) hin in Abhängigkeit von dem Abstandssensorsignal gesteuert ist.

2. Vorrichtung nach Anspruch 1,
dadurch gekennzeichnet,
daß der Codierkopf (16) einen Laserschreiber aufweist.

3. Vorrichtung nach Anspruch 1,
dadurch gekennzeichnet,
daß der Codierkopf (16) eine Farbspritzeinrichtung aufweist.

4. Vorrichtung nach Anspruch 3,
dadurch gekennzeichnet,
daß die Farbspritzeinrichtung eine Reihe von nebeneinanderliegenden Farbspritzöffnungen aufweist und daß der Codierkopf (16) während der Codeaufbringung in Vertikalrichtung verfahrbar ist.

5. Vorrichtung nach einem der Ansprüche 1 bis 4,
dadurch gekennzeichnet,
daß der Abstandssensor (22) eine Lichtschranke, eine Laserschranke, ein kapazitiver Näherungsschalter oder ein Infrarot-Näherungsschalter ist.

6. Vorrichtung nach einem der Ansprüche 1 bis 5,
dadurch gekennzeichnet,
daß sie einen Impulsgeber für das Vorhandensein eines Schlachttiers (20) aufweist und derart gesteuert ist, daß in Abhängigkeit von dem Impulsgebersignal die Bewegung des Codierkopfs (16) zu dem Schlachttier (20) hin ausgelöst wird.

7. Vorrichtung nach einem der Ansprüche 1 bis 6,
dadurch gekennzeichnet,
daß sie an eine zentrale, speicherprogrammierbare Steuerung (30) angeschlossen ist, der ermittelte Daten der einzelnen Schlachttiere (20) zugeführt werden und die ihrerseits Steuerbefehle an die elektronische Steuerung des Codierkopfs gibt.

8. Vorrichtung nach Anspruch 7,
dadurch gekennzeichnet,
daß die zentrale, speicherprogrammierbare Steuerung (30) die Zielsteuerung des jeweiligen Schlachttiers (20) oder Schlachttierteils im Kühlhaus durchführt.

9. Vorrichtung nach Anspruch 7 oder 8,
dadurch gekennzeichnet,
daß an die zentrale, speicherprogrammierbare Steuerung (30) ein vorzugsweise am Kühlhausausgang positionierter Scanner (34) angeschlossen ist, der ihr an Schlachttieren (20) bzw. Schlachttierteilen gelesene Kontrollinformationen zuleitet.

## Claims

1. An automatically operating coding apparatus for slaughter animals, comprising a coding head (16) attached to a base (4) and movable towards and away from the respective slaughter animal (20), and comprising an electronic control of the coding head ( 16) with respect to the particular code to be applied, with a coding head (16) being provided which operates without contacting the respective slaughter animal and movement of which towards the respective slaughter animal (20) is controlled such that the coding head (16) stops in a working distance from the slaughter animal,
characterized in that the coding head (16) has associated therewith a distance sensor (22) operating in contact-free manner for detecting the distance between the respective slaughter animal (20) and the coding head (16); and
in that the movement of the coding head (16) towards the respective slaughter animal (20) is controlled as a function of the distance sensor signal.

2. An apparatus according to claim 1,
characterized in that the coding head (16) comprises a laser pen.

3. An apparatus according to claim 1,
characterized in that the coding head (16) comprises a colour spraying means.

4. An apparatus according to claim 3,
characterized in that the colour spraying means comprises a number of juxtaposed colour spraying openings, and in that the coding head (16) is movable in vertical direction during code application.

5. An apparatus according to any one of claims 1 to 4,
characterized in that the distance sensor (22) is a light barrier, a laser barrier, a capacitive approximation switch, or an infrared approximation switch.

6. An apparatus according to any one of claims 1 to 5,
characterized in that it comprises a pulse generator for the presence of a slaughter animal (20) and is controlled such that the movement of the coding head (16) towards the slaughter animal (20) is activated as a function of the pulse generator signal.

7. An apparatus according to any one of claims 1 to 6,
characterized in that it is connected to a central stored program control (30) which receives data ascertained with respect to the individual slaughter animals (20) and in turn issues control commands to the electronic control of the coding head.

8. An apparatus according to claim 7,
characterized in that the central stored program control (30) performs the destination control of the respective slaughter animal (20) or animal part in the cold storage.

9. An apparatus according to claim 7 or 8,
characterized in that the central stored program control (30) has a scanner (34) connected thereto that is preferably positioned at the exit of the cold storage and supplies said control with checking information read on slaughter animals (20) or animal parts, respectively.

## Revendications

1. Dispositif de codage pour animaux abattus fonctionnant automatiquement, comprenant une tête de codage (16) montée sur une base (4), qui peut être avancée vers l'animal abattu (20) et ramenée en arrière depuis ce dernier, et comprenant une commande électronique de la tête de codage (16) en ce qui concerne le code à appliquer, une tête de codage (16) fonctionnant sans contact avec l'animal abattu (20) concernée étant prévue, dont le mouvement est commandé vers l'animal abattu (20) de manière que la tête de codage (16) conserve une distance de travail par rapport à l'animal abattu,
caractérisé en ce qu'à la tête de codage (16) est associé un capteur de distance (22) fonctionnant sans contact pour détecter la distance entre l'animal abattu (20) concerné et la tête de codage (16); et en ce que le mouvement de la tête de codage (16) vers l'animal abattu concerné (20) est commandé en fonction du signal du capteur de distance.

2. Dispositif selon la revendication 1, caractérisé en ce que la tête de codage comprend un dispositif d'écriture à laser.

3. Dispositif selon la revendication 1, caractérisé en ce que la tête de codage (16) comprend un dispositif de pulvérisation de peinture.

4. Dispositif selon la revendication 3, caractérisé en ce que le dispositif de pulvérisation de peinture comprend une série d'ouvertures de pulvérisation de peinture disposées les unes contre les autres et en ce que la tête de codage (16) peut être déplacée en direction verticale pendant l'application du code.

5. Dispositif selon l'une quelconque des revendications 1 à 4, caractérisé en ce que le capteur de distance (22) est une barrière lumineuse, une barrière à laser, un commutateur de proximité capacitif ou un commutateur de proximité à infrarouges.

6. Dispositif selon l'une quelconque des revendications 1 à 5, caractérisé en ce qu'il comprend un générateur d'impulsion déterminant la présence d'un animal abattu (20) et commandé de manière qu'en fonction du signal du générateur d'impulsion, le mouvement de la tête de codage (16) soit déclenché en direction de l'animal abattu (20).

7. Dispositif selon l'une quelconque des revendications 1 à 6, caractérisé en ce qu'il est raccordé à une commande centrale (30) à mémoire programmable, à laquelle sont appliquées les données détectées concernant les animaux abattus individuels (20) et qui envoie de son côté des ordres de commande à la commande électronique de la tête de codage.

8. Dispositif selon la revendication 7, caractérisé en ce que la commande centrale à mémoire programmable (30) exécute la commande de visée sur l'animal abattu (20), ou une partie d'animal abattu, dans la chambre froide.

9. Dispositif selon la revendication 7 ou 8, caractérisé en ce qu'un scanneur (34) disposé de préférence à la sortie de la chambre froide est raccordé à la commande centrale à mémoire programmable (30), qui lui applique les informations de contrôle lues sur l'animal abattu (20) ou sur des parties d'animal abattu.
